# EUROPÄISCHE PATENTSCHRIFT

(11) **EP 1 681 195 B1**
(45) Veröffentlichungstag und Bekanntmachung des Hinweises auf die Patenterteilung: **27.02.2008**
(21) Anmeldenummer: 05025012.5
(22) Anmeldetag: 16.11.2005
(51) Int. Cl.: B60J 7/19

(54) **Verriegelung für ein verstellbares Fahrzeugdach**
Lock for a movable vehicle roof
Verrouillage pour un toit rétractable de véhicule

(30) Priorität: 12.01.2005 DE 102005001604
(43) Veröffentlichungstag der Anmeldung: 19.07.2006
(73) Patentinhaber: CTS Fahrzeug-Dachsysteme GmbH, 74321 Bietigheim-Bissingen (DE)
(72) Erfinder: Schumacher, Thorsten, 25495 Kummerfeld (DE); Netzel, Peter, 20537 Hamburg (DE)
(74) Vertreter: Wittner, Walter

(56) Entgegenhaltungen:
- EP-A- 0 887 215
- EP-A- 1 544 014
- DE-A1- 10 258 053
- DE-A1- 19 539 085
- US-A- 5 944 375

## Beschreibung

Die Erfindung betrifft eine Verriegelung für ein verstellbares Fahrzeugdach gemäß dem Oberbegriff des Anspruches 1.

Verriegelungen für verstellbare Fahrzeugdächer in Form von Hardtops wie auch von Softtops sind in vielfältiger Form bekannt. Üblicherweise werden die jeweiligen Dachabdeckungen, sei es in Form von formsteifen Dachteilen oder in Form eines auszuspannenden Verdeckes, über eine Dachkinematik getragen und zwischen einer den Fahrzeuginnenraum überdeckenden Schließposition und einer den Fahrzeuginnenraum öffnenden Ablageposition verstellt, wobei in der Schließposition eine Verriegelung gegen den Windlauf vorgenommen wird. Entsprechende Verriegelungsteile sind meist einerseits dem Windlauf, andererseits dem an den Windlauf anschließenden Dachteil zugeordnet und schlossartig aufgebaut, wobei die Schlösser meist als Spannschlösser ausgebildet sind. Da sowohl der Windlauf wie auch das vordere Dachteil oder eine entsprechende Dachkappe flach und schlank gestaltet sein sollen, ergeben sich für die Verriegelungsvorrichtung mit zugeordnetem Antrieb entsprechende Einschränkungen, zumal erhebliche Spannkräfte aufgebracht werden müssen.

Aus der DE 198 32 385 A1 ist eine Lösung bekannt, die dieser Problematik dadurch Rechnung trägt, dass der Windschutzscheibenrahmen mit seinen seitlichen A-Säulen für die Unterbringung eines Teiles der Verriegelungsvorrichtung genutzt wird, und zwar für die Durchführung von Zugelementen, die über einen in Verlängerung der A-Säulen unterhalb derselben im Karosseriebereich angeordneten Stellantrieb beaufschlagt sind und denen im vorderen Dachteil bzw. der Dachkappe lediglich eine Fangöse zugeordnet wird, sodass sich trotz geringen Raumbedarfs im Bereich von Windlauf und Dachkappe hohe Zug- und Spannkräfte aufbringen lassen. Verbunden ist dies allerdings mit der Notwendigkeit, den Stellantrieb in einer dachfernen Zone anzuordnen, die üblicherweise bereits für andere Zwecke genutzt wird, sodass mit einer solchen Lösung weitergehende konstruktive Umstellungen verbunden sind.

Aus der DE 195 39 085 A1 ist eine Verriegelung der eingangs genannten Art bekannt, bei der das vordere Dachteil der drei in der Schließstellung des als Hardtop ausgebildeten Daches aneinander anschließenden Dachteile einen zwischen zwei Seitenteilen liegenden Schiebedeckel aufweist, der in eine zum anschließenden mittleren Dachteil eingeschobene Öffnungslage verstellbar ist. Bei geöffnetem Schiebedeckel werden die bei geschlossenem Dach in Fahrzeuglängsrichtung verlaufenden, an den Windlauf anschließenden Seitenteile gegeneinander in eine Querlage eingeschwenkt, in der sie an das mittlere Dachteil frontseitig angelegt sind. Die Schwenkbewegung der Seitenteile gegenüber dem mittleren Dachteil wird über eine jeweils zwischen den Seitenteilen und dem mittleren Dachteil vorgesehene Viergelenkanordnung mit quer zur Dachebene sich erstreckenden, aufrechten und zum jeweiligen Dachteil feststehenden Achsen ermöglicht. Die Verriegelung umfasst weiter ein Stellgestänge, über das ein frontseitig zum jeweiligen Seitenteil liegendes, gegen den Windlauf des Fahrzeuges verhakbares Verriegelungsglied bei dem mittleren Dachteil zugeordneten Stellantrieb verstellbar ist. Um das jeweilige, zur Öffnung des Daches in seine Öffnungslage verstellte, am Seitenteil vorgesehene Verriegelungsglied unabhängig von der jeweiligen Schwenklage des Seitenteils in seiner jeweiligen Einstelllage, hier in seiner Öffnungslage, zu halten, wird im Stellgestänge im Bereich des Übergangs zwischen mittlerem Dachteil und Seitenteil ein Übertragungslenker vorgesehen.

Dieser Übertragungslenker ist durch einen zweiarmigen Schwenkhebel gebildet, der an einem der Lenker der Viergelenkanordnung über eine Schwenkachse angelenkt ist, die parallel zu den Achsen des Lenkers der Viergelenkanordnung verläuft und mittig zwischen diesen liegt. An dem durch den Schwenkhebel gebildeten Übertragungslenker sind die zum Verriegelungsglied und zum Stellantrieb führenden Teile des Stellgestänges einander zur Schwenkachse gegenüberliegend angelenkt, wobei die Anlenkpunkte so gelegt sind, dass bei der Öffnungslage des Verriegelungsgliedes entsprechender Stelllage des Schwenkhebels die Anlenkpunkte der Stellgestängeteile koaxial zu den Achsen des den Schwenkhebel tragenden Lenkers der Viergelenkanordnung liegen, so dass mit der Verstellung der Viergelenkanordnung keine Verstellung der zum Verriegelungsglied und zum Stellantrieb führenden Teile des Stellgestänges verbunden ist, solange die koaxiale Lage gegeben ist. Die Ausbildung des Übertragungslenkers als zu einem der Lenker der Viergelenkanordnung schwenkbar angelenkter Schwenkhebel bedingt aber, dass bei Abweichungen von dieser koaxialen Lage die Stellwege des Stellgestänges von der jeweiligen Lage des Lenkers der Viergelenkanordnung abhängig sind, auf dem der Schwenkhebel gelagert ist, und dies zusätzlich zur Änderung des von der Winkellage des Schwenkhebels abhängigen Übersetzungsverhältnisses in der über das Stellgestänge hergestellten Verbindung zwischen dem mittleren Dachteil zugeordneten Stellantrieb und dem Verriegelungsglied.

In Bezug auf dreiteilige Hardtopdächer für Fahrzeuge wurde mit der EP 1 544 014 A1 bereits vorgeschlagen, für das Dach mit seinen gegeneinander verstellbaren Dachteilen eine Dachkinematik vorzusehen, über die das Dach an der Karosserie angelenkt ist und die als kinematische Kette ausgebildet ist. Ergänzend ist dieses Dach mit einer Verriegelungsvorrichtung ausgestattet, über die das vordere Dachteil gegen den karosserieseitigen Windlauf des Fahrzeuges zu verriegeln ist sowie mit einer Blockiervorrichtung, über die die Dachkinematik in der Schließposition des Fahrzeugdaches zu fixieren ist. Diese Vorrichtungen, also die Verriegelungsvorrichtung und die Blockiervorrichtung sind mit einander gekoppelt, derart, dass eine gemeinsame Verstellung dieser Vorrichtungen ohne wechselseitige Behinderung möglich ist. Dies wird dadurch erreicht, dass die als kinematische Ketten gestalteten Vorrichtungen Drehpunkte aufweisen, die zueinander zur Deckung zu bringen sind, so dass sich eine gemeinsame Achslage mit gemeinsamer Verstellbarkeit der um diese Achse verschwenkbaren Teile ergibt.

Ferner ist aus der DE 102 58 053 A1 ein dreiteiliges Hardtop-Dach für Fahrzeuge bekannt, dessen Dachkinematik in der Verbindung zur Karosserie eine Viergelenkanordnung aufweist, deren zur karosserieseitigen Basis gegenüberliegende Koppel durch das mittlere Dachteil des dreiteiligen Daches gebildet ist, dessen hinteres Dachteil durch den rückwärtigen Lenker der Viergelenkanordnung getragen ist, so dass eine Verschwenkbarkeit des hinteren Dachteiles zum mittleren Dachteil um die Anlenkung des hinteren Lenkers der Dachkinematik am mittleren Dachteil als Drehachse gegeben ist. Die Dachkinematik umfasst weiter zwischen dem mittleren und dem vorderen Dachteil eine weitere Viergelenkanordnung, die als vordere Viergelenkanordnung über ein weiteres Viergelenk mit der hinteren Viergelenkanordnung antriebsverbunden ist und über die das vordere Dachteil beim Öffnen des Daches über das mittlere Dachteil geschwenkt wird, bei gleichzeitiger Verschwenkung des mittleren und des hinteren Dachteiles über die hintere Viergelenkanordnung, über die in der Ablageposition des Daches das mittlere Dachteil über dem in Rückenlage befindlichen hinteren Dachteil positioniert wird.

Der Erfindung liegt die Aufgabe zugrunde, eine Verriegelung der eingangs genannten Art derart auszugestalten, dass sich in einfacher Weise eine Anschlagbegrenzung für das Stellgestänge sowie auch ein Ausgleich von im Übergang zwischen vorderem Dachteil zum Windlauf auftretenden Querbewegungen bzw. von gegebenen Toleranzen erreichen lässt.

Erreicht wird dies mit den Merkmalen des Anspruches 1, demzufolge bei dem vorgesehenen dreiteiligen, im Paket mit über das mittlere Dach geschwenktem vorderen Dachteil zu stapelndem Dach am vorderen Dachteil im Übergang zwischen Übertragungslenker und auf das Verriegelungsglied zugreifender Stellstange ein zum vorderen Dachteil längsverschiebliches Schlittenglied vorgesehen wird, an dem die Stellstange angelenkt ist.

Das Schlittenglied ist bevorzugt zumindest hinsichtlich einer seiner Endlagen, insbesondere hinsichtlich seiner der geöffneten Verriegelung entsprechenden Endlage, anschlagbegrenzt und/oder als in ihrer Längserstreckung kulissengeführte Stellstange gegebenenfalls auch in seiner Verstelllänge einstellbar.

Das Schlittenglied und der Übertragungslenker weisen im Rahmen der Erfindung bevorzugt nahezu gleiche Erstreckungsrichtung auf, sodass sich in Verbindung mit der Betätigung der Verriegelungsvorrichtung über den Stellantrieb ergebende Längsverlagerungen des Übertragungslenkers zum bei geöffneter Verriegelungsstellung parallelen Lenker der Viergelenkanordnung zwischen mittlerem und vorderem Dachteil nur geringe Winkelveränderungen und damit auch geringe Änderungen im Übersetzungsverhältnis ergeben.

Die erfindungsgemäß ausgestaltete Verriegelung ermöglicht bei dreiteiligen Dachkonzepter die Zuordnung des Stellantriebs zum mittleren Dachteil, sodass ausgehend vom mittleren Dachteil über den Stellantrieb sowohl die Verriegelung gegen den angrenzend zum vorderen Dachteil vorgesehenen Windlauf betätigt werden kann, wie auch eventuelle zusätzliche Verriegelungen, sei es für das hintere Dachteil gegen die Karosserie oder zur Verriegelung von Dachteilen untereinander.

Wird das mittlere Dachteil mit der Koppel eines Viergelenks verbunden, das als Teil der Dachkinematik über einen seiner basisseitig gegen die Karosserie angebundenen Lenker das hintere Dachteil trägt, so bildet das hintere Dachteil quasi den C-Säulenlenker, gegenüber dem der weitere Lenker des Viergelenks als Hauptlenker in Fahrtrichtung nach vorne versetzt ist. Der Hauptlenker kann dadurch einen dachseitigen Verlaufsbereich aufweisen, in dem er sich im Bereich des Stellgestänges erstreckt, das vom Stellantrieb beaufschlagt ist, wodurch die Verriegelungseinrichtung auch genutzt werden kann, um einen Teil der Dachkinematik, hier den Hauptlenker, in seiner der Schließposition des Daches entsprechenden Stellung zum Dach zu blockieren.

Durch die Erfindung wird somit eine Verriegelungseinheit geschaffen, die eine Verriegelungsvorrichtung für das Dach wie auch eine Blockiereinrichtung zur Fixierung der Dachkinematik gegenüber dem geschlossenen Dach umfasst, wobei bezogen auf das dreiteilige Dach durch die Verriegelung des Hauptlenkers gegenüber dem mittleren Dachteil auch der hintere Dachteil blockiert ist, da dieser - quasi als C-Säulenlenker - am Mittelteil des Daches - als Koppel - in einer Drehachse angelenkt ist.

Über das Stellgestänge lässt sich des Weiteren auch eine Blockierung des vorderen Dachteiles gegenüber dem mittleren Dachteil realisieren, und dies auch dann, wenn das vordere Dachteil einer bevorzugten Ausgestaltung der Erfindung zur Folge über eine Viergelenkanordnung derart am mittleren Dachteil angelenkt ist, dass das vordere Dachteil in Ablageposition des Daches über dem mittleren Dachteil liegt, so dass ein Dachteilpaket entsteht, bei dem vorderes und mittleres Dachteil bei gleicher Ausrichtung das in Rückenlage befindliche hintere Dachteil überdecken.

Weitere Einzelheiten und Merkmale der Erfindung ergeben sich aus den Ansprüchen. Ferner wird die Erfindung nachfolgend anhand eines schematisiert dargestellten Ausführungsbeispieles erläutert, wobei
- Fig. 1: in Seitenansicht das Dach insgesamt, und
- Fig. 2: in vergrößertem Maßstab, eine entsprechende Darstellung, aufgeteilt in einen vorderen und einen hinteren Dachbereich, zeigt, wobei der Übersichtlichkeit halber das Dach mit der Dachkinematik zur Verriegelungseinrichtung versetzt gezeichnet ist.

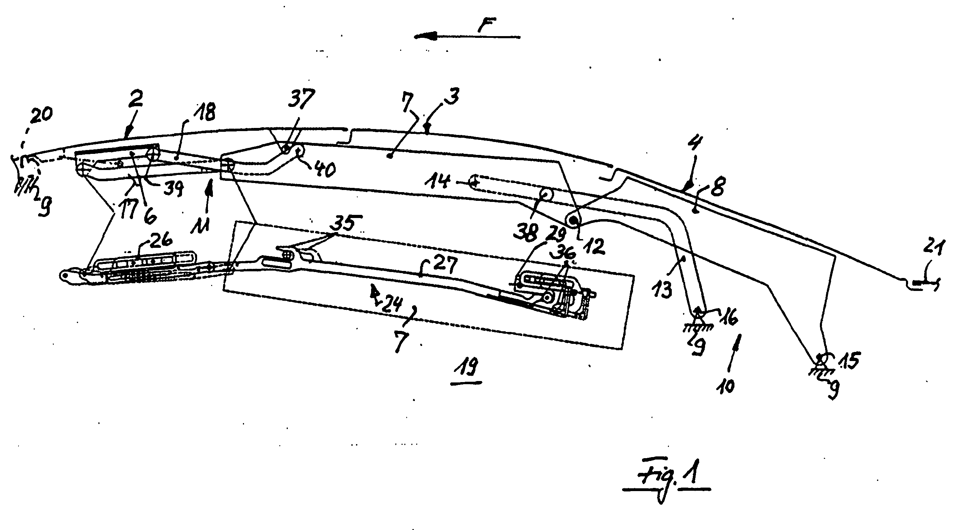

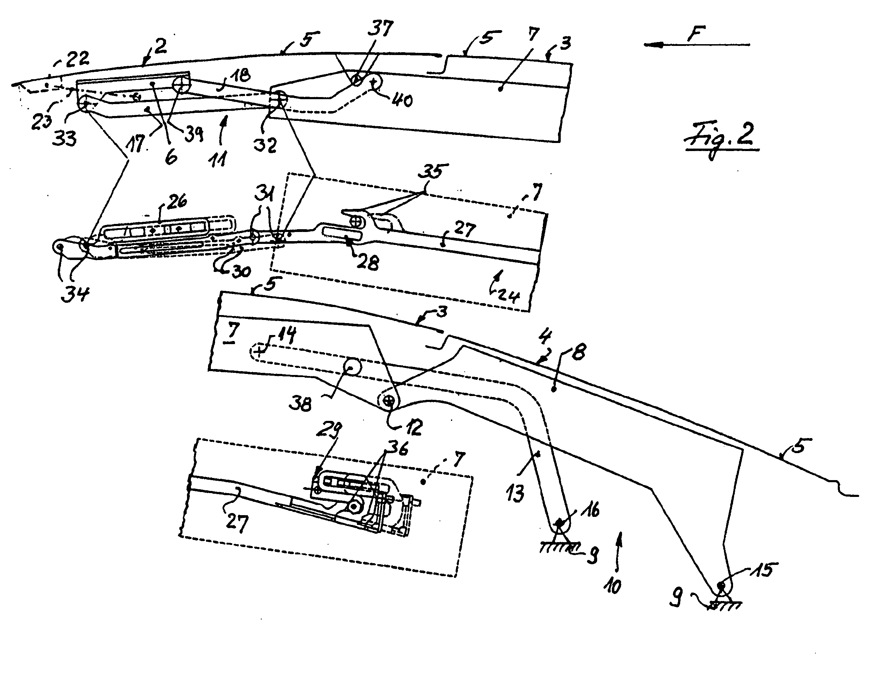

Gezeigt ist in den Fig. 1 und 2 - in Fig. 2 der Deutlichkeit halber vergrößert und deshalb aufgeteilt dargestellt - als verstellbares Fahrzeugdach 1 ein Hardtop, das drei Dachteile 2 bis 4 aufweist, nämlich ein vorderes Dachteil 2, ein mittleres Dachteil 3 und ein hinteres Dachteil 4.

Entsprechend der schematisierten Darstellung umfassen die formsteifen Dachteile 2 bis 4 jeweils eine formsteife Dachhaut, für die Dachteile 2 bis 4 jeweils mit 5 bezeichnet, und ein Dachrahmenteil, entsprechend der Aufzählung der Dachteile 2 bis 4 mit 6 bis 8 bezeichnet. Die Dachrahmenteile 6 bis 8 bilden in der Schemadarstellung Teile der Dachkinematik, die in der Anlenkung zur schematisch angedeuteten Karosserie 9 heckseitig durch ein Viergelenk 10 und als Verbindung von mittlerem Dachteil 3 zu vorderem Dachteil 2 als Viergelenkanordnung 11 ausgebildet ist. Das heckseitige Viergelenk 10 umfasst als so genannten C-Säulenlenker den hinteren Dachrahmenteil 8, der mit dem mittleren Dachteil 3 über eine Drehachse 12 verbunden ist. Mit dem mittleren Dachteil 3 bzw. dessen Dachrahmenteil 7 ist weiter ein karosserieseitig angelenkter Hauptlenker 13 verbunden, dessen Anlenkpunkt zum Dachrahmenteil 7 mit 14 bezeichnet ist und gegenüber der Drehachse 12 in Fahrtrichtung F nach vorne versetzt ist. Der Dachrahmenteil 7 bildet somit im Übergang zwischen der Drehachse 12 und dem Anlenkpunkt 14 die Koppel des Viergelenkes 10, das basisseitig mit unmittelbarer Anlenkung zur Karosserie 9 gezeigt ist, dessen karosserieseitige Anlenkpunkte 15, 16 aber auch zur Karosserie 9 verlagerbar abgestützt sein können, beispielsweise durch entsprechende Zwischenlenker oder dergleichen.

Der die Koppel zwischen der Drehachse 12 und dem Anlenkpunkt 14 bildende Bereich des mittleren Dachrahmenteiles 7 endet etwa am hinteren Ende des mittleren Dachteiles 3, und der Dachrahmenteil 7 greift in Fahrtrichtung F, also nach vorne, über den von der Dachhaut 5 überdeckten Teil des mittleren Dachteiles 3 hinaus in den Bereich des vorderen Dachteiles 2 hinein. Am vorderen, in Überdeckung zur Dachhaut 5 des vorderen Dachteiles 2 liegenden Teil des Dachrahmens 7 sind die Lenker 17, 18 der Viergelenkanordnung 11 angelenkt, zu denen der vordere Dachrahmenteil 6 die Koppel bildet.

Entsprechend dem geschilderten Aufbau des über einen nicht gezeigten, beispielsweise am Hauptlenker 13 angreifenden Antrieb verstellbaren Daches 1 ist dieses nach hinten in eine karosserieseitige, nicht dargestellte Verdeckaufnahme abzusenken, in der die Dachteile 2 bis 4 im Paket übereinander liegen, wobei, unter Beibehaltung der Ausrichtung bei geschlossenem Dach 1, das vordere Dachteil 2 das mittlere Dachteil 3 überdeckt und das hintere Dachteil 4 in Rückenlage unter dem mittleren Dachteil 3 liegt.

Das geschlossene Dach 1 überdeckt den Fahrzeuginnenraum 19 und schließt frontseitig an den angedeuteten Windlauf 20 eines Windschutzscheibenrahmens an. Heckseitig ist der Übergang zwischen der Dachhaut 5 des hinteren Dachteiles 4 und einem Heckdeckel 21 angedeutet.

Während im hinteren Bereich des Daches 1 dieses über das Viergelenk 10 der Dachkinematik bei geschlossenem Dach 1 gegen die Karosserie 9 abgestützt ist, ist frontseitig das vordere Dachteil 2 bei geschlossenem Dach gegen den Windlauf 20 verriegelt, wobei diese Verriegelung im Detail nicht dargestellt ist und als Spannschloss ausgebildet ist, das ein dachteilseitiges, zum Beispiel als Spannhaken ausgebildetes Verriegelungsglied umfasst, dem seitens des Windlaufes 20 eine zu hintergreifende Gegenhalterung zugeordnet ist. Angedeutet ist in den Figuren strichliert als Aufnahme für den Spannhaken ein Schlosskasten 22, auf den - strichpunktiert dargestellt - eine Stellstange 23 ausläuft, die als Bestandteil der Verriegelungsvorrichtung an einem Schlittenglied 26 angelenkt ist, das über eine Kulissenführung am vorderen Rahmenteil 6 längsverschieblich, insbesondere anschlagbegrenzt in zumindest einer Stellrichtung längsverschieblich abgestützt ist.

Das Schlittenglied 26 ist seinerseits über einen Übertragungslenker 27 längsverschieblich, der als Teil des Stellgestänges 24 mit einer kulissengeführten Zug- und Druckstange 27 verbunden ist. Die Zug- und Druckstange 27 ist im vorderen und hinteren Bereich jeweils über eine insbesondere lineare Schiebeführung am mittleren Dachrahmenteil 7 gehalten, wobei die Schiebeführung im vorderen Teil des Dachrahmens 7 als Gleitsteinführung 28 und im hinteren Teil des Dachrahmens 7 als eine Schlittenführung 29 ausgebildet ist. Im Bereich der Schlittenführung 29 ist die Zug- und Druckstange 27 über einen nur angedeuteten Stellantrieb beaufschlagt, der beispielsweise durch einen hydraulischen Stellzylinder gebildet ist.

Die Verriegelungsvorrichtung mit ihrem Stellgestänge 24 weist zugeordnet zum Übergang zwischen zwei Dachteilen, hier dem vorderen Dachteil 2 und dem mittleren Dachteil 3, den Anlenkpunkt 31 zwischen dem Übertragungslenker 30 und der Zug- und Druckstange 27 auf und es liegt dieser Anlenkpunkt 31 bei geöffneter Verriegelung, strichliert gezeigt, koaxial zum Anlenkpunkt 32 des vorderen Lenkers 17 der Viergelenkanordnung 11. Der Lenker 17 weist, wiederum bezogen auf das geschlossene Dach, einen vorderen Anlenkpunkt 33 zum Dachrahmenteil 6 auf und zu diesem liegt der vordere Anlenkpunkt 34 des Übertragungslenkers 30 bei geschlossenem Dach und geöffneter Verriegelungsvorrichtung koaxial. Der Übertragungslenker 30 bildet somit einen bezüglich seiner Anlenkpunkte 31, 34 zum Dachrahmenteil 6 koaxial zum Lenker 17 liegenden Lenker, sodass bei geöffneter Verriegelung Schwenkbewegungen der Dachteile 2 und 3 zueinander ohne Auswirkungen auf das Schlittenglied 26 bleiben, dieses somit zum Dachrahmenteil 6 in seiner Lage unverändert ist, womit auch während der Öffnungs- und Schließbewegung das Schlossteil in seiner Öffnungslage verbleibt.

Den Übertragungslenker 30 bezüglich seiner Anlenkpunkte 31 und 34 achsparallel über den Anlenkpunkten 32 und 33 des Lenkers 17 zu lagern erweist sich als zweckmäßig, da der Lenker 17 bezogen auf die Viergelenkanordnung 11 den vorderen Lenker bildet und somit die Stellstange 23 verhältnismäßig kurz gehalten werden kann. Grundsätzlich könnte eine entsprechende Anordnung aber auch zwischen dem Lenker 18 mit den dachseitigen Anlenkpunkten 39 und 40 und dem Übertragungslenker 30 vorgesehen werden. Die Anlenkung der Stellstange 23 an der Schlittenführung 26, die bevorzugt als auf beabstandeten, zum Rahmenteil 6 feststehenden Gleitsteinen geführte Schiebestange ausgeführt ist, erfolgt zweckmäßigerweise auf einem zum Schlitten bzw. zur Schiebestange feststehendem Gelenkbolzen, so beispielsweise auf einem seitlich auskragenden Kugelbolzen, sodass über die Stellstange 23 auch Bewegungen bzw. Toleranzen in Querrichtung des Daches ausgeführt bzw. ausgeglichen werden können.

Die Anordnung des Stellantriebes für das Stellgestänge im rückwärtigen Bereich des mittleren Dachteiles 2 erweist sich als zweckmäßig, unter anderem auch aus Raumgründen, und ermöglicht zudem für die Zug- und Druckstange 27 die Anordnung für die Gleitsteinführung 28 und die Schlittenführung 29, die auch als Gleitsteinführung ausgebildet sein kann, mit verhältnismäßig großem Abstand zueinander, so insbesondere auch im Überdeckungsbereich zum Hauptlenker 13 und zum vorderen Dachteil 2, wobei die Erstreckung des vorderen Dachrahmenteiles 6 in diesen Überdeckungsbereich nicht dargestellt ist.

Die Figuren veranschaulichen aber, dass, bezogen auf das geschlossene Dach, im Bereich der Gleitsteinführung 28 und der Schlittenführung 29 seitens der Zug- und Druckstange 27 hakenförmige Fangglieder 35, 36 vorgesehen sind - in der Öffnungsstellung gestrichelt gezeichnet -, denen am vorderen Dachteil 2 und am Hauptlenker 13 Rastbolzen 37 bzw. 38 zugeordnet sind. Die Lage Rastbolzen 37, 38 zu den Fanggliedern 35, 36 ist derart, dass, wie gestrichelt angedeutet, bei in Öffnungslage der Verriegelung stehender Zug- und Druckstange 27 und in Schließlage befindlichem Dach 1 das jeweilige hakenförmige Fangglied 35, 36 mit seinem Fangmaul dem jeweiligen Rastbolzen 36, 37 vorgelagert ist, derart, dass mit Verstellung der Zug- und der Druckstange 27 in Schließrichtung der Verriegelung der jeweilige Rastbolzen 37, 38 vom Fangglied 35, 36 erfasst wird, mit der Folge, dass bei entsprechend keilförmiger Verjüngung des Fangmaules des Fanggliedes 35, 36 eine Verspannung des vorderen Dachteiles 2 gegen das mittlere Dachteil 3 stattfindet, sowie auch eine Verspannung des mittleren Dachteiles 3 gegen den Hauptlenker 13. Die Verspannung gegen den Hauptlenker 13 führt zu einer Blockade des Viergelenkes 10 und damit zu einer starren Verbindung von mittlerem Dachteil 3 und hinterem Dachteil 4, entsprechend der Blockade der Viergelenkanordnung 11 zwischen vorderem Dachteil 2 und mittlerem Dachteil 3 über die Verspannung des vorderen Dachteiles 2 gegen das mittlere Dachteil 3.

Insgesamt ergibt sich damit, in Verbindung mit der frontseitigen Verriegelung des Daches 1 gegen den Windlauf 20, trotz Mehrteiligkeit eine nahezu starrer Dachverbund, wie er sowohl im Hinblick auf die Aussteifung der Karosserie bei geschlossenem Dach 1 als auch im Hinblick auf am Dach 1 angreifende sonstige Kräfte, so insbesondere Windkräfte angestrebt wird.

Durch die Erfindung wird somit eine Verriegelungseinrichtung geschaffen, die neben der Verriegelung des Daches 1 gegenüber einem angrenzenden Bauteil, hier dem Windlauf 20, auch die Blockade der Dachteile 2 bis 4 zueinander und damit die Schaffung einer im geschlossenen Zustand starren Dacheinheit ermöglicht, die zudem im zentralen Übergangsbereich zwischen hinterem Dachteil 4 und mittlerem Dachteil 3 über die Dachkinematik tragend ausgesteift ist, sodass sich unter Unfallgesichtspunkten auch eine überrollbügelähnliche Funktion ergibt.

## Patentansprüche

1. Verriegelung für ein verstellbares Fahrzeugdach(1),
• das drei Dachteile (2 bis 4) aufweist,
• das mittels einer Dachkinematik zwischen einer den Fahrzeuginnenraum (19) überdeckenden Schließposition mit in Fahrzeuglängsrichtung aneinander anschließendem vorderen Dachteil (2), mittleren Dachteil (3) und hinteren Dachteil (4) und einer den Fahrzeuginnenraum (19) öffnenden Ablageposition verstellbar ist, in der die Dachteile (2 - 4) zu einem Dachteilpaket zusammengefasst sind,
• das mit einer Verriegelungsvorrichtung zum Verriegeln des vorderen Dachteiles (2) gegen ein angrenzendes Bauteil versehen ist, und
• dessen Dachkinematik im Übergang zwischen vorderem Dachteil (2) und mittlerem Dachteil (3) als tragende Verbindung eine Viergelenkanordnung (11) aufweist,
wobei die Verriegelungsvorrichtung ein sich übergreifend zu vorderem Dachteil (2) und mittlerem Dachteil (3) längs des Daches (1) verlaufendes Stellgestänge (24) aufweist, wobei das Stellgestänge (24), entsprechend der Dachkinematik, im Übergang zwischen vorderem Dachteil (2) und mittlerem Dachteil (3) zumindest eine Achse aufweist, und wobei das Stellgestänge (24) einen längsverschieblich mit dem mittleren Dachteil (3) verbundenen Gestängeteil (27) umfasst, an den ein Übertragungslenker (30) anschließt, der zum mit dem mittleren Dachteil (3) verbundenen Gestängeteil (27) und zu einem mit dem vorderen Dachteil (2) verbundenen, im Übergang auf ein gegen den Windlauf (20) verriegelbares Verriegelungsglied der Verriegelungsvorrichtung liegenden Stellglied in der Schließposition des Fahrzeugdaches (1) bei geöffneter Verriegelungsvorrichtung Anlenkpunkte (31, 34) aufweist, die koaxial zu den Anlenkpunkten (32, 33) eines Lenkers (17) der das vordere Dachteil (2) mit dem mittleren Dachteil (3) verbindenden Viergelenkanordnung liegen,
**dadurch gekennzeichnet,**
**dass** bei dem in der Ablageposition der Fahrzeugdaches (1) gebildeten Dachteilpaket das vordere Dachteil (2) das mittlere Dachteil (3) sowie das vordere Dachteil (2) und das mittlere Dachteil (3) bei gleicher Ausrichtung das in Rückenlage befindliche hintere Dachteil (4) überdecken, dass das an den Übertragungslenker (30) anschließende Stellglied als mit dem vorderen Dachteil (2) anschlagbegrenzt längsverschieblich verbundenes Schlittenglied (26) ausgebildet ist, dass das Schlittenglied (26) und der Übertragungslenker (30) gleichgerichtet verlaufen und dass das Schlittenglied (26) und das Verriegelungsglied über eine am Schlittenglied (26) angelenkte Stellstange (23) des Stellgestänges (24) verbunden sind.

2. Verriegelung nach Anspruch 1,
**dadurch gekennzeichnet,**
**dass** der mit dem mittleren Dachteil (3) längsverschieblich verbundene Gestängeteil als Zug- und Druckstange (27) über einen am mittleren Dachteil vorgesehenen Stellantrieb beaufschlagt ist.

3. Verriegelung nach Anspruch 2,
**dadurch gekennzeichnet,**
**dass** der Stellantrieb als Linearantrieb ausgebildet ist.

4. Verriegelung nach einem der Ansprüche 1 bis 3,
**dadurch gekennzeichnet,**
**dass** das hintere Dachteil (4) zum mittleren Dachteil (3) des Fahrzeugdaches (1) eine diese verbindende Drehachse (12) aufweist.

5. Verriegelung nach Ansprüche 1 bis 4,
**dadurch gekennzeichnet,**
**dass** die Dachkinematik ein mit dem mittleren Dachteil (3) als Koppel verbundenes Viergelenk (10) aufweist, dessen bezogen auf die Fahrtrichtung (F) hinterer Lenker (8) Träger des hinteren Dachteiles (4) ist.

6. Verriegelung nach Anspruch 5,
**dadurch gekennzeichnet,**
**dass** der hintere Lenker (8) des mit dem mittleren Dachteil (3) als Koppel verbundenen Viergelenkes (10) der Dachkinematik als C-Säulenlenker dem hinteren Dachteil (4) zugeordnet ist.

7. Verriegelung nach Anspruch 5 oder 6,
**dadurch gekennzeichnet,**
**dass** das hintere Dachteil (4) zwischen seinen den C-Säulenlenkern zugeordneten Seitenteilen eine zu den Seitenteilen verstellbare, den Übergang zwischen den Seitenteilen bildende Heckscheibe aufweist.

8. Verriegelung nach einem der vorhergehenden Ansprüche,
**dadurch gekennzeichnet,**
**dass** die Verriegelungsvorrichtung Bestandteil einer Verriegelungseinheit ist, die eine die Dachkinematik in der Schließposition des Fahrzeugdaches (1) sperrende Blockiervorrichtung umfasst.

9. Verriegelung nach Anspruch 8,
**dadurch gekennzeichnet,**
**dass** die Blockiervorrichtung dem mittleren Dachteil (3) zugeordnet ist und gemeinsam zur Verriegelungsvorrichtung zwischen einer sperrenden und einer freigebenden Lage verstellbar ist.

10. Verriegelung nach Anspruch 9,
**dadurch gekennzeichnet,**
**dass** die Blockiervorrichtung in ihrer sperrenden Lage das vordere Dachteil (2) gegen das mittlere Dachteil (3) und das mittlere Dachteil (3) gegen einen der Lenker der Dachkinematik lagefest verspannt.

11. Verriegelung nach Anspruch 10,
**dadurch gekennzeichnet,**
**dass** die Blockiervorrichtung das mittlere Dachteil (3) gegen den dem C-Säulenlenker (8) in Fahrtrichtung (F) vorgelagerten Hauptlenker (13) des das mittlere Dachteil (3) über seine Koppel tragenden Viergelenkes (10) lagefest festlegt.

12. Verriegelung nach einem der Ansprüche 8 bis 11,
**dadurch gekennzeichnet,**
**dass** die Blockiervorrichtung eine keilschieberartige Verbindung zwischen dem längsverschieblich zum mittleren Dachteil (3) geführten Gestängeteil (27) des Stellgestänges (24) sowie dem vorderen Dachteil (2) und dem Hauptlenker (13) umfasst.

13. Verriegelung nach Anspruch 12,
**dadurch gekennzeichnet,**
**dass** die keilschieberartige Verbindung der Blockiervorrichtung durch hakenförmige Fangglieder (35, 36) und von diesen zu übergreifende Gegenglieder als Rastbolzen (37, 38) gebildet ist.

14. Verriegelung nach Anspruch 13,
**dadurch gekennzeichnet,**
**dass** die hakenförmigen Fangglieder (35, 36) am Stellgestänge (24) vorgesehen sind.

15. Verriegelung nach einem der Ansprüche 8 bis 14,
**dadurch gekennzeichnet,**
**dass** das Stellgestänge (24) im Bereich des keilschieberartigen Zugriffs auf das jeweilige Dachteil gegenüber dem mittleren Dachteil (3) längsverschieblich abgestützt und geführt ist.

## Claims

1. Lock for an adjustable vehicle roof (1),
• which comprises three roof parts (2 to 4),
• which may be adjusted by means of a roof kinematic system between a closed position covering the vehicle interior (19) with a front roof part (2), central roof part (3) and rear roof part (4) adjacent to one another in the vehicle longitudinal direction and a storage position opening the vehicle interior (19), in which the roof parts (2-4) are combined to form a roof part packet,
• which is provided with a locking device for locking the front roof part (2) to an adjacent component, and
• the roof kinematic system thereof comprising a four bar linkage (11) in the transition between the front roof part (2) and the central roof part (3) as a supporting connection,
the locking device comprising a control linkage (24) extending in an overlapping manner relative to the front roof part (2) and the central roof part (3) along the roof (1), the control linkage (24), corresponding to the roof kinematic system, in the transition between the front roof part (2) and the central roof part (3) comprising at least one axis, and the control linkage (24) comprising a longitudinally displaceable linkage part (27) connected to the central roof part (3), to which a transmission link (30) is attached, which comprises points of articulation (31, 34) relative to the linkage part (27) connected to the central roof part (3) and relative to an adjusting member connected to the front roof part (2) located in the transition to a locking member of the locking device which may be locked against the cowl panel (20) in the closed position of the vehicle roof (1) and when the locking device is open, which are located coaxially relative to the points of articulation (32, 33) of a link (17) of the four bar linkage connecting the front roof part (2) to the central roof part (3), **characterized in that** in the roof part packet formed in the storage position of the vehicle roof (1), the front roof part (2), the central roof part (3) as well as the front roof part (2) and the central roof part (3), with the same alignment, overlap the rear roof part (4) located in the rear position, **in that** the adjusting member attached to the transmission link (30) is configured as a sliding member (26) longitudinally displaceably connected to the front roof part (2) and limited by a stop, **in that** the sliding member (26) and the transmission link (30) extend in the same direction and **in that** the sliding member (26) and the locking member are connected via a control rod (23) of the control linkage (24) articulated to the sliding member (26).

2. Lock according to Claim 1, **characterized in that** the linkage part connected longitudinally displaceably to the central roof part (3) is acted upon as a pull and push rod (27) via an actuating drive provided on the central roof part.

3. Lock according to Claim 2, **characterized in that** the actuating drive is configured as a linear drive.

4. Lock according to one of Claims 1 to 3, **characterized in that** the rear roof part (4) relative to the central roof part (3) of the vehicle roof (1) comprises a rotational axis (12) connecting said rear roof part and said central roof part.

5. Lock according to Claims 1 to 4, **characterized in that** the roof kinematic system comprises a four link mechanism (10) connected to the central roof part (3) as a coupler link, the rear link (8) thereof relative to the direction of travel (F) supporting the rear roof part (4).

6. Lock according to Claim 5, **characterized in that** the rear link (8) of the four link mechanism (10) of the roof kinematic system connected to the central roof part (3) as a coupler link, is associated with the rear roof part (4) as a C-pillar link.

7. Lock according to Claim 5 or 6, **characterized in that** the rear roof part (4) between its side parts associated with the C-pillar links comprises a rear window which may be adjusted relative to the side parts and forming the transition between the side parts.

8. Lock according to one of the preceding claims, **characterized in that** the locking device is a component of a locking unit, which comprises a blocking device locking the roof kinematic system in the closed position of the vehicle roof (1).

9. Lock according to Claim 8, **characterized in that** the blocking device is associated with the central roof part (3) and together may be adjusted relative to the locking device between a locking and a releasing position.

10. Lock according to Claim 9, **characterized in that** the blocking device in its locking position tensions the front roof part (2) against the central roof part (3) and the central roof part (3) fixedly against one of the links of the roof kinematic system.

11. Lock according to Claim 10, **characterized in that** the blocking device fixedly secures the central roof part (3) against the main link (13) mounted upstream of the C-pillar link (8) in the direction of travel (F) of the four link mechanism (10) supporting the central roof part (3) via its coupler link.

12. Lock according to one of Claims 8 to 11, **characterized in that** the blocking device comprises a connection in the manner of a sliding wedge between the linkage part (27) of the control linkage (24) longitudinally displaceably guided toward the central roof part (3) as well as the front roof part (2) and the main link (13).

13. Lock according to Claim 12, **characterized in that** the connection of the blocking device in the manner of a sliding wedge is formed by hook-shaped catching members (35, 36) and counter members as latching bolts (37, 38) to be overlapped thereby.

14. Lock according to Claim 13, **characterized in that** the hook-shaped catching members (35, 36) are provided on the control linkage (24).

15. Lock according to one of Claims 8 to 14, **characterized in that** the control linkage (24), in the region of the action on the respective roof part relative to the central roof part (3) in the manner of a sliding wedge, is longitudinally displaceably supported and guided.

## Revendications

1. Système de verrouillage pour toit de véhicule réglable (1)
• qui comporte trois pièces de toit (2 à 4),
• qui est réglable au moyen d'une cinématique de toit entre une position de fermeture recouvrant l'habitacle du véhicule (19), comprenant une pièce de toit avant (2), une pièce de toit médiane (3) et une pièce de toit arrière (4) se succédant dans le sens longitudinal du véhicule et une position de rangement ouvrant l'habitacle du véhicule (19) et dans laquelle les pièces de toit (2-4) sont regroupées en un paquet de pièces de toit,
• qui est équipé d'un dispositif de verrouillage pour verrouiller la pièce de toit avant (2) contre une pièce de construction adjacente, et
• dont la cinématique de toit présente comme raccordement porteur, à la transition entre la pièce de toit avant (2) et la pièce de toit médiane (3), un système d'articulation à quatre points (11),
le dispositif de verrouillage comportant un système de barres de réglage (24) s'étendant le long du toit (1) en empiétant sur la pièce de toit avant (2) et la pièce de toit médiane (3), le système de barres de réglage (24), en fonction de la cinématique de toit, présentant, à la transition entre la pièce de toit avant (2) et la pièce de toit médiane (3), au moins un axe et le système de barres de réglage (24) comprenant un élément barre (27) relié avec mobilité longitudinale à la pièce de toit médiane (3) et auquel se raccorde une bielle de transmission (30) qui présente des points d'articulation (31, 34) avec l'élément barre (27) relié à la pièce de toit médiane (3) et avec un élément de réglage relié à la pièce de toit avant (2) et se trouvant à la transition vers un élément de verrouillage pouvant être verrouillé contre la baie (20) du dispositif de verrouillage en position de fermeture du toit du véhicule (1), le dispositif de verrouillage étant ouvert, lesquels points d'articulation étant placés coaxialement par rapport aux points d'articulation (32, 33) d'une bielle (17) du système d'articulation à quatre points reliant la pièce de toit avant (2) à la pièce de toit médiane (3),
**caractérisé en ce que**,
lorsque le paquet de pièces de toit formé est en position de rangement du toit du véhicule (1), la pièce de toit avant (2), la pièce de toit médiane (3) tout comme la pièce de toit avant (2) et la pièce de toit médiane (3), avec une même orientation, recouvrent la pièce de toit arrière (4) se trouvant en position couchée, que l'élément de réglage se raccordant à la bielle de transmission (30) est réalisé sous forme d'un élément en patin (26) relié avec mobilité longitudinale et limitation de butée à la pièce de toit avant (2), que l'élément en patin (26) et la bielle de transmission (30) s'étendent dans le même sens et que l'élément en patin (26) et l'élément de verrouillage sont reliés par une barre de réglage (23) s'articulant à l'élément en patin (26) du système de barres de réglage (24).

2. Système de verrouillage selon la revendication 1,
**caractérisé en ce que**
l'élément barre relié avec mobilité longitudinale à la pièce de toit médiane (3) est sollicité en tant que barre de traction et de compression (27) par un actionneur prévu sur la pièce de toit médiane.

3. Système de verrouillage selon la revendication 2,
**caractérisé en ce que**
l'actionneur est réalisé sous forme d'une commande linéaire.

4. Système de verrouillage selon une des revendications 1 à 3,
**caractérisé en ce que**
la pièce de toit arrière (4) présente par rapport à la pièce de toit médiane (3) du toit du véhicule (1) un axe de rotation (12) reliant celles-ci.

5. Système de verrouillage selon une des revendications 1 à 4,
**caractérisé en ce que**
la cinématique de toit présente une articulation à quatre points (10) reliée en tant que raccord à la pièce de toit médiane (3) et dont la bielle arrière (8), relativement au sens de circulation (F), est le support de la pièce de toit arrière (4).

6. Système de verrouillage selon la revendication 5,
**caractérisé en ce que**
la bielle arrière (8) de l'articulation à quatre points (10) reliée en tant que raccord à la pièce de toit médiane (3) de la cinématique de toit est associée sous forme de montant arrière à la pièce de toit arrière (4).

7. Système de verrouillage selon la revendication 5 ou 6,
**caractérisé en ce que**
la pièce de toit arrière (4) présente, entre ses pièces latérales associées aux montants arrière, une lunette arrière constituant la transition entre les pièces latérales et pouvant être réglée par rapport aux pièces latérales.

8. Système de verrouillage selon une des revendications précédentes,
**caractérisé en ce que**
le dispositif de verrouillage fait partie intégrante d'une unité de verrouillage qui englobe un dispositif de blocage bloquant la cinématique de toit en position de fermeture du toit du véhicule (1).

9. Système de verrouillage selon la revendication 8,
**caractérisé en ce que**
le dispositif de blocage est associé à la pièce de toit médiane (3) et peut être réglé en même temps que le dispositif de verrouillage entre une position de blocage et une position de libération.

10. Système de verrouillage selon la revendication 9,
**caractérisé en ce que**
le dispositif de blocage, dans sa position de blocage, serre à emplacement fixe la pièce de toit avant (2) contre la pièce de toit médiane (3) et la pièce de toit médiane (3) contre une des bielles de la cinématique de toit.

11. Système de verrouillage selon la revendication 10,
**caractérisé en ce que**
le dispositif de blocage fixe à emplacement fixe la pièce de toit médiane (3) contre la bielle principale (13) placée en amont du montant arrière (8) dans le sens de circulation (F) de l'articulation à quatre points (10) supportant la pièce de toit médiane (3) par son raccord.

12. Système de verrouillage selon une des revendications 8 à 11,
**caractérisé en ce que**
le dispositif de blocage englobe un raccordement de type vanne entre l'élément barre (27) guidé avec mobilité longitudinale vers la pièce de toit médiane (3) du système de barres de réglage (24) ainsi qu'entre la pièce de toit avant (2) et la bielle principale (13).

13. Système de verrouillage selon la revendication 12,
**caractérisé en ce que**
le raccordement de type vanne du dispositif de blocage est constitué par des éléments d'accrochage en forme de crochets (35, 36) et par des éléments conjugués où ils s'engrènent et qui servent de tourillons d'enclenchement (37, 38).

14. Système de verrouillage selon la revendication 13,
**caractérisé en ce que**
les éléments d'accrochage en forme de crochets (35, 36) sont réalisés sur le système de barres de réglage (24).

15. Système de verrouillage selon une des revendications 8 à 14,
**caractérisé en ce que**
le système de barres de réglage (24) s'appuie et est guidée avec mobilité longitudinale au niveau de la prise en forme de vanne sur la pièce de toit respective par rapport à la pièce de toit médiane (3).
